(19) **Europäisches Patentamt / European Patent Office / Office européen des brevets**

(11) **EP 2 985 509 A1**

(12) **EUROPEAN PATENT APPLICATION**
published in accordance with Art. 153(4) EPC

(43) Date of publication:
**17.02.2016 Bulletin 2016/07**

(21) Application number: **14870724.3**

(22) Date of filing: **12.11.2014**

(51) Int Cl.:
**F17D 5/00** *(2006.01)*    **G01C 21/00** *(2006.01)*

(86) International application number:
**PCT/RU2014/000859**

(87) International publication number:
**WO 2015/094015 (25.06.2015 Gazette 2015/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.12.2013 RU 2013155927**

(71) Applicants:
• **Oil Transporting Joint Stock Company "Transneft"**
**(JSC "Transneft")**
**Moscow 119180 (RU)**
• **Joint, Stock Company "Transneft Diascan"**
**g. Lukhovitsy, Moskovskaya obl. 140501 (RU)**

(72) Inventors:
• **MIROSHNIK, Aleksandr Dmitrievich**
**Moskovskaya obl.**
**G. Kolomna 140406 (RU)**
• **GURIN, Sergei Fedorovich**
**Moskovskaya Obl.**
**G. Kolomna 140409 (RU)**
• **KIRYANOV, Maksim Yuryevich**
**G. Ryazan 390044 (RU)**
• **ORLOV, Vyacheslav Viktorovich**
**G. Ryazan 390037 (RU)**

(74) Representative: **Glawe, Delfs, Moll Partnerschaft mbB von Patent- und Rechtsanwälten**
**Rothenbaumchaussee 58**
**20148 Hamburg (DE)**

(54) **DEVICE AND METHOD FOR DETERMINING POSITION OF PIPELINE**

(57)    The invention relates to measurement technology and can be used for determining the position of a pipeline in space. A device consists of a hardware portion and of a software portion; in the hardware portion, each of three gyroscopes and accelerometers of a strapdown inertial navigation system is connected to one orthogonal axis of an in-pipe inspection device. The software portion consists of algorithms for determining navigation parameters using a global satellite navigation system (GPS or/and GLONASS). Data are transcribed from the software portion and a calculation of navigation parameters is carried out on a computer using a special program. A method for determining the relative displacement of a pipeline consists in using data regarding measurements of the magnitudes and directions of linear displacements of a section of a pipeline, which data is based on the results of passing an in-pipe inspection device, having a hardware portion installed thereon, two or more times along the same section of a pipeline. The obtained data is arranged in tables and combined according to distance. The criterion for the existence of a pipeline displacement in an inspected site involves a curvature differential module exceeding a predetermined threshold value.

Fig. 7

EP 2 985 509 A1

**Description**

**Description of the Invention**

The invention relates to measurement technology and may be used for determining a spatial position of a pipeline, including its position in horizontal and vertical planes, during operation and construction of pipelines.

A device for measuring a spatial position of a pipeline is known in the art (RU Patent No. 1809297 A1, publ. 4/15/1993) that comprises a platform with sensors of inclination in horizontal and vertical planes as arranged thereon and a sensor of distance traveled and is provided with a housing for the purpose of increasing measurement accuracy and efficiency. Elastic collars serving for arranging the device within a pipeline are installed on the housing. The sensor of inclination is made as a vertical gyroscope, and the sensor of inclination in a horizontal plane is made as a directional gyroscope. The device is equipped with a system of secondary transducers, a switching unit, an analog-to-digital converter and a microcontroller.

A device for determining a spatial position of trunk pipelines is known in the art (SU Patent No. 1404815 A1, publ. on 6/23/1988). The device comprises a housing with a gyro system consisting of a gyrocompass, a vertical gyroscope and a sensor of housing position made in the form of a radiating element attached to the gyro system. The housing is meant for arranging in a pipeline. The gyro system is equipped with a focon array which ends are optically coupled with the radiating element and has a light-sensitive tape capable of moving within the housing.

A device for inspection of inner surface, spatial position and stress state of a pipeline is known in the art (RU Patent No. 2106569 C1, publ. on 3/10/1998). The device comprises a measuring module consisting of a container with equipment for measuring plan and height marks that consists of a digital computing complex and a tri-axial gyro stabilizer with a gyro unit and an accelerometer. The second path sensor that is connected with the equipment for measuring plan and height marks is arranged on the outer surface of the container. Disadvantages of all these devices are: autonomy of data obtained, which leads to errors in a pipeline position determined, as well as that navigation data obtained may not reflect all parameters of a pipeline position, such as angles and radii of pipeline bends in space.

Equipment for measuring linear deformations of a trunk pipeline in known in the art (RU Patent No. 2334162 C1, publ. on 9/20/2008) that comprises strain vibrating-wire transducers arranged in different cross-sections of a trunk pipeline at a same certain pitch. The equipment additionally comprises a receiver of a satellite radionavigation system, a multiplexor, a microprocessor, an entry-level storage unit, and an analog-to-digital converter. A drawback of this invention lies in that strain gages are installed fixedly, which does not enable to obtain complete information on a change in a pipeline position.

The objective of the invention is to develop a device - diagnostic complex for determining a pipeline position (hereinafter, "DCDPP") using a global satellite navigation system (GPS and/or GLONASS), which can increase accuracy of measurements of a pipeline spatial position with due regard to correcting points as well as accuracy of measurement of pipeline bend angles, i.e., pitch and bearing angles, and bend radii in every point of a pipeline with due regard to the Earth rotation; as well as to develop a method for determining a pipeline relative displacement according to results obtaining during two or more inspection runs of the DCDPP, which method allows determination of pipeline spatial displacements by comparing later trajectories of the pipeline with the basic one.

The technical effect consists in that the claimed DCDPP device consists of a hardware portion and a software portion. The DCDPP hardware portion is mounted on an in-pipe inspection device (hereinafter, "IID"). The hardware portion comprises a set of sensors: an accelerometer connected to the X-axis of a strapdown inertial navigation system (hereinafter, "SINS"), an accelerometer connected to the SINS Y-axis, an accelerometer connected to the SINS Z-axis, a gyroscope connected to the SINS X-axis, a gyroscope connected to the SINS Y-axis, a gyroscope connected to the SINS Z-axis, and an odometer. The software portion comprises algorithms for determining navigation parameters in the following sequence: calculation of a linear velocity - while determining movement of the in-pipe inspection device according to data obtained from the hardware portion of the diagnostic complex - for the purpose of determining a pipeline position; alignment, i.e., an IID spatial position is determined by identifying initial pitch and bearing angles in the North-East-Height rectangular coordinate system with due regard to the Earth rotation and the IID input geodesic coordinates within first several minutes when the IID is not moved; navigation parameters are calculated with the use of a time increment value between reports of accelerometers and gyroscopes and readings of the odometer together with determination of corresponding angles of roll, pitch, bearing; radii of pipeline bends are calculated both in vertical and in horizontal directions; trajectory is corrected with the use of correcting point coordinates obtained by referencing particular points of a pipeline to the geodesic coordinates in the North-East-Height system with the use of a global satellite navigation system (GPS and/or GLONASS). Data is re-recorded from the DCDPP hardware portion, and navigation parameters are calculated in a computer using a special program. Thus, data obtained from the DCDPP hardware portion is a data array comprising odometer readings and readings of three accelerometers and three gyroscopes in a rectangular coordinate system connected to the SINS orthogonal axes and, correspondingly, to the IID, the SINS axis corresponding to the IID longitudinal axis. After an inspection pass of the IID through a pipeline, data array is re-recorded from the DCDPP hardware portion, and all navigation parameters are calculated in a computer using a special program. By making use of DCDPP data together with a global satellite navigation system (GPS and/or GLONASS) it is possible to improve measurement accuracy of a pipeline spatial position with due regard to correcting points.

A magnitude and directions of pipeline displacements are determined according to results obtained after two or more inspection passes through the same section of a pipeline.

The inventive method for determining relative displacement of a pipeline according to results of two or more inspection passes of the DCDPP consists in using measurement data on magnitudes and directions of linear displacements of a pipeline section, as obtained in the result of two or more inspection passes of the IID with the DCDPP installed thereon through the same section of a pipeline with the same direction of the working fluid flow. Data obtained from the DCDPP is arranged in tables and combined according to distances. This data, as obtained from the DCDPP, is used for calculating maximum magnitudes, directions and displacement angles of a pipeline.

Data obtained during an earlier pass of the IID with the DCDPP hardware portion installed thereon is considered as basic, and data obtained in the result of later passes is compared to this basic data. The criterion for the existence of a pipeline displacement in an inspected section is complied with when the curvature differential module exceeds a preset threshold value.

The proposed method for determining relative displacements of a pipeline according to results of two or more DCDPP inspection passes enables to clearly determine a pipeline spatial displacement.

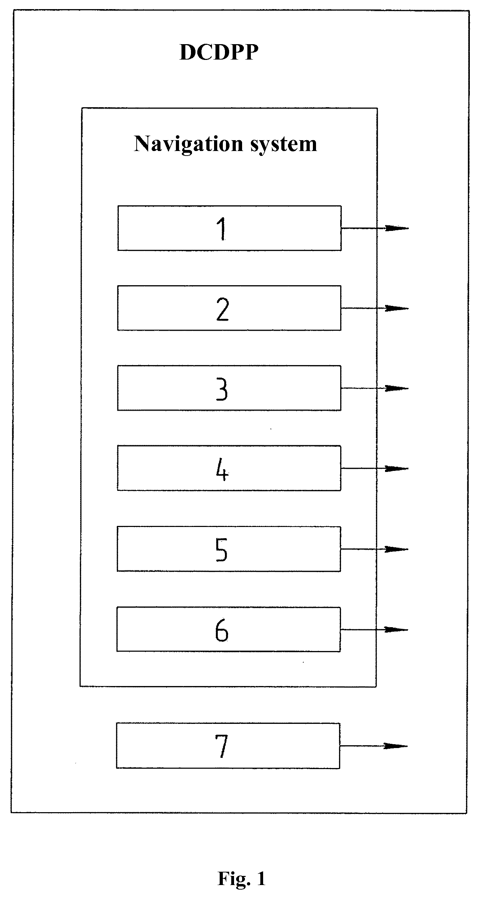

Fig. 1 shows the DCDPP hardware portion comprising a set of the following sensors:

1. an accelerometer connected to the SINS orthogonal X-axis, ax (m/s$^2$);

2. an accelerometer connected to the SINS orthogonal Y-axis, ay (m/s$^2$);

3. an accelerometer connected to the SINS orthogonal Z-axis, az (m/s$^2$);

4. a gyroscope connected to the SINS orthogonal X-axis, gx (rad/s);

5. a gyroscope connected to the SINS orthogonal Y-axis, gy (rad/s);

6. a gyroscope connected to the SINS orthogonal Z-axis, gz (rad/s);

7. an odometer, bj (imp).

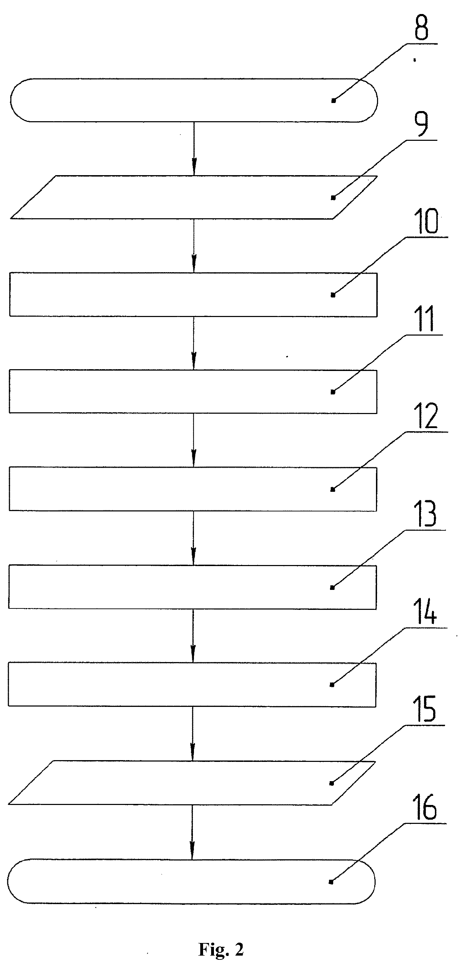

Fig. 2 shows a block diagram of the algorithms used for determining navigation parameters of the DCDPP software portion:

8. "Start";

9. "Obtaining of data" (from the accelerometers, gyroscopes and the odometer) for scan values of j=l...N;

10. "Calculation of linear velocity" algorithm;

11. "Alignment" algorithm, i.e., determination of an IID spatial position;

12. "Calculation of navigation parameters" algorithm;

13. "Calculation of radii" algorithm;

14. "Correction of trajectory" algorithm;

15. "Data output";

16. "End".

Fig. 3 shows a pipeline position trajectory as identified according to results of a DCDPP basic pass:

17. the start point of a displaced section in a pipeline inspected section, as having coordinates $x_1$, $y_1$, $z_1$;

18. the end point of a displaced section in a pipeline inspected section, as having coordinates $x_2$, $y_2$, $z_2$.

Fig. 4 shows a pipeline position trajectory as identified according to results of the DCDPP next pass:

19. the start point of a displaced section in a pipeline inspected section, as having coordinates $x_1'$, $y_1'$, $z_1'$;

20. the end point of a displaced section in a pipeline inspected section, as having coordinates $x_2'$, $y_2'$, $z_2'$.

Fig. 5 shows isolated horizontal and vertical components of pipeline curvature, as identified according to results of a DCDPP basic pass:

21. vertical component of pipeline curvature, EV;

22. horizontal component of pipeline curvature, EH.

Fig. 6 shows isolated horizontal and vertical components of pipeline curvature, as identified according to results of the DCDPP next pass:

23. vertical component of pipeline curvature, EV';

24. horizontal component of pipeline curvature, EH'.

Fig. 7 shows direction determination for a pipeline displacement vector and a pipeline displacement direction angle:

25. a unit vector of a pipeline direction axis, $\overline{n}$;

26. a plane perpendicular to the unit vector, $\overline{n}$, p;

27. a calculated vector of a pipeline axis displacement, $\overline{\Delta}$;

28. projection of the calculated vector of a pipeline axis displacement $\overline{\Delta}$ on a plane p, $\overline{\Delta}p$;

29. unit vector of vertical, $\overline{Z}$;

30. projection of the vertical $\overline{Z}$ on a plane p, $\overline{Z}p$;

31. a required pipeline displacement direction angle, $\alpha$.

The DCDPP consists of a hardware portion and a software portion. The hardware portion (Fig. 1) comprises accelerometers 1, 2, 3 (Fig. 1), gyroscopes 4, 5, 6 (Fig. 1) in a rectangular coordinate system connected to the SINS and, correspondingly, to the IID, and an odometer 7 (Fig. 1). Data obtained from the DCDPP hardware portion is an array comprising readings of the three accelerometers 1, 2, 3 (Fig. 1) and the three gyroscopes 4, 5, 6 (Fig. 1) in the rectangular coordinate system connected to the SINS and, correspondingly, to the IID, and readings from the odometer 7 (Fig. 1). The software portion consists of algorithms used for determining navigation parameters on the basis of data obtained from the DCDPP hardware portion for scan values of j=l...N 9 (Fig. 2) in the following sequence:

The "Calculation of linear velocity" algorithm 10 (Fig. 2): a DCDPP movement speed is calculated by using odometer readings and odometer timer impulse readings:

$$s_j = b_j f_0,$$

$$V = F\{S, L, c\}/\Delta t,$$

where:

$f_0$ - odometer scale factor;
$s_j$ - distance traveled;

$S=[S_1, S_2 ... S_N]$, $V=[v_1, v_2 ... v_N]$ - linear velocity;
$\Delta t$ - time increment;

$F\{\cdot,L,c\}$ - filtering of moving averages with rectangular window: $P_f = F\{S, L, c\}$, $P_f = [p_{f1} \ p_{f2} \ ... \ p_{fN}]$;

$$p_{f_j} = \frac{1}{1+2L(1-c)}\sum_{r=j-L(1-c)}^{j+L(1-c)} p_{r_j}$$

- an average of a sample data ranked according to increments Pr, for which the array $[p_{j-L} ... p_j ...p_{k+L}]$ at j-count serves as the source data;
j-L>0, j+L≤N, L_ half-width of the filter window;
c - eliminated amount of ranked data, in fractions of 1.

The "Alignment" algorithm 11, i.e., determination of an IID position in space (Fig. 2): at the pass start time the IID remains immovable for several minutes. This time period is sensed by values of movement speed obtained at the previous step. At this time the SINS is aligned. Initial pitch and bearing angles are determined in the North-East-Height rectangular coordinate system by the Earth rotation and preset geodesic coordinates. Further, when calculating the IID travel through a pipeline, determined values of these angles allow consideration of the Earth rotation and deduction of the corresponding component of the Earth angular velocity from gyroscopes readings. Thus, the Earth rotation has no practical effect on determined navigation parameters. The alignment mode is subdivided into two steps: rough alignment and fine alignment.

Rough alignment - calculation of approximate parameters:

$$\gamma_C = -\operatorname{arctg}(\alpha_{x_M}/\alpha_{z_M}),$$

$$\theta_C = -\operatorname{arctg}\left(\frac{a_{y_M}}{\sqrt{a_{x_M}^2 + a_{z_M}^2}}\right),$$

where:

arctg($\cdot$) - means arc tangent calculation subject to a quadrant of arguments;

$$a_{i_M} = \frac{1}{L_c}\sum_{j=1}^{L_c} a_{i_j}, \quad i=x,y,z, \quad L_C$$

- is as number of counts assigned for rough alignment when the IID is immovable;
$\gamma_C$ is a roll angle;
$\theta_C$ is a pitch angle;

Fine alignment - parameters are specified in several steps:

The first step:

$$K_{L_c} = \begin{bmatrix} \cos(\theta_C/2) & \sin(\theta_C/2) & 0 & 0 \\ -\sin(\theta_C/2) & \cos(\theta_C/2) & 0 & 0 \\ 0 & 0 & \cos(\theta_C/2) & \sin(\theta_C/2) \\ 0 & 0 & -\sin(\theta_C/2) & \cos(\theta_C/2) \end{bmatrix} \cdot \begin{bmatrix} \cos(\gamma_C/2) \\ 0 \\ \sin(\gamma_C/2) \\ 0 \end{bmatrix},$$

$$\Omega_{L_c} = \begin{bmatrix} \omega_{x_{L_c}} \\ \omega_{y_{L_c}} \\ \omega_{z_{L_c}} \end{bmatrix} = \begin{bmatrix} 0 \\ 0 \\ \sin\varphi_A \end{bmatrix} \omega_E,$$

$$U_j = \begin{bmatrix} 1 - c_1\nabla^2_{\omega_j} + c_2\nabla^4_{\omega_j} \\ \omega_{x_j}\Delta ts_{\omega j} \\ \omega_{y_j}\Delta ts_{\omega j} \\ \omega_{z_j}\Delta ts_{\omega j} \end{bmatrix}, \text{где}$$

where:

$K_{L_c}$ is an initial value of normalized full quaternion as obtained from Eulerian angles;

$\Omega_{L_c}$ - is an initial value of the Earth angular velocity;

$j = L_c...L_a$, $L_a$ is a number of counts assigned for fine alignment, the IID is immovable at this time;

$i = \omega$, $g$, $\varphi_A$ is a latitude of the alignment point;

$\gamma_j$, $\theta_j$, $\psi_j$, $x_j$ are, respectively, current angles of roll, pitch, bearing, angle of direction to the geographic North - the bearing of the navigation coordinate system;

$\omega_E$ is the Earth angular velocity;

c1...c6 are constants.

The second step:

$$K_j = U_j^{-1} \circ \left( K_{j-1} \circ \begin{bmatrix} 1 - c_1\nabla^2_{g_j} + c_2\nabla^4_{g_j} \\ g_{x_j}\Delta ts_{g j} \\ g_{y_j}\Delta ts_{g j} \\ g_{z_j}\Delta ts_{g j} \end{bmatrix} \right),$$

where:

$K_j$ is a current value of normalized full quaternion.

The third step:

$$\gamma_j = -\text{arctg}\left[ \frac{2(k_{2j}k_{4j} - k_{1j}k_{3j})}{k_{1j}^2 - k_{2j}^2 - k_{3j}^2 + k_{4j}^2} \right]$$

The fourth step:

$$\theta_j = -\text{arctg}\left\{ \frac{2(k_{1j}k_{2j} + k_{3j}k_{4j})}{\left[2(k_{2j}k_{3j} - k_{1j}k_{4j})\right]^2 + \left[k_{1j}^2 - k_{2j}^2 + k_{3j}^2 - k_{4j}^2\right]^2} \right\}$$

The fifth step:

$$\psi_j = -\operatorname{arctg}\left[\frac{2\left(k_{2j}k_{3j} - k_{1j}k_{4j}\right)}{k_{1j}^2 - k_{2j}^2 + k_{3j}^2 - k_{4j}^2}\right]$$

Then, calculation of an angular velocity current value follows:

$$\Omega_j^* = \begin{bmatrix} \omega_{x_j}^* \\ \omega_{y_j}^* \\ \omega_{z_j}^* \end{bmatrix} = K_j^{-1} \circ \left(\Omega_j \circ K_j\right),$$

$$B_j^* = \begin{bmatrix} 1 & -0.5\Delta t\left(g_{z_j} - \omega_{z_j}^*\right) & 0.5\Delta t\left(g_{y_j} - \omega_{y_j}^*\right) \\ 0.5\Delta t\left(g_{z_j} - \omega_{z_j}^*\right) & 1 & -0.5\Delta t\left(g_{x_j} - \omega_{x_j}^*\right) \\ -0.5\Delta t\left(g_{y_j} - \omega_{y_j}^*\right) & 0.5\Delta t\left(g_{x_j} - \omega_{x_j}^*\right) & 1 \end{bmatrix}^{-1} \begin{bmatrix} a_{x_j}\Delta t \\ a_{y_j}\Delta t \\ a_{z_j}\Delta t \end{bmatrix},$$

$$B_j = \begin{bmatrix} b_{x_j} \\ b_{y_j} \\ b_{z_j} \end{bmatrix} = K_j \circ \left(B_j^* \circ K_j^{-1}\right),$$

$$l_{ij} = e^{-\Delta t c_6} l_{ij-1} + \frac{1 - e^{-\Delta t c_6}}{\Delta t c_6} b_{i_j},$$

$$r_{ij} = r_{ij-1} + 0.25\Delta t c_7 \left(l_{ij-1} + l_{ij}\right),$$

$$\chi_j = \operatorname{arctg}'\left(r_{y_j}/r_{x_j}\right),$$

$$\Omega_j = \begin{bmatrix} -r_{x_j} - c_7 l_{x_j} \\ r_{y_j} + c_7 l_{y_j} \\ \omega_E \sin\varphi_A \end{bmatrix},$$

$$\gamma_a = \frac{1}{L_a - L_c}\sum_{j=L_c}^{L_a}\gamma_j, \quad \theta_a = \frac{1}{L_a - L_c}\sum_{j=L_c}^{L_a}\theta_j, \quad \psi_a = \frac{1}{L_a - L_c}\sum_{j=L_c}^{L_a}\psi_j, \quad \chi_a = \frac{1}{L_a - L_c}\sum_{j=L_c}^{L_a}\chi_j,$$

where:

$B_j$ is a linear velocity increment at the current time slice;

$l_{ij}$ and $r_{ij}$ are parameters of a feedback loop according to an evaluation of angular velocity of rotation of the device in a horizontal plane;

\* is the symbol of relation to the associated coordinate system.

The navigation coordinate system (hereinafter, "NCS") is a rectangular coordinate system the beginning of which is associated with the alignment point, the main plane is the plane of local horizon, one axis is directed upward.

During transformation from the NCS to an associated system and vice versa, a resulting vector comprises the last three elements of multiplication.

The "Calculation of navigation parameters" algorithm 12 (Fig. 2) is subdivided into several steps:

The first step - calculation of intermediate parameters:

$$K_{L_a} = \begin{bmatrix} \cos(\psi_a/2) & 0 & 0 & -\sin(\psi_a/2) \\ 0 & \cos(\psi_a/2) & -\sin(\psi_a/2) & 0 \\ 0 & \sin(\psi_a/2) & \cos(\psi_a/2) & 0 \\ \sin(\psi_a/2) & 0 & 0 & \cos(\psi_a/2) \end{bmatrix} \cdot \begin{bmatrix} \cos(\theta_a/2) & -\sin(\theta_a/2) & 0 & 0 \\ \sin(\theta_a/2) & \cos(\theta_a/2) & 0 & 0 \\ 0 & 0 & \cos(\theta_a/2) & -\sin(\theta_a/2) \\ 0 & 0 & \sin(\theta_a/2) & \cos(\theta_a/2) \end{bmatrix} \times$$

$$\times \begin{bmatrix} \cos(\gamma_a/2) \\ 0 \\ \sin(\gamma_a/2) \\ 0 \end{bmatrix},$$

$$Z_{L_a} = \begin{bmatrix} z_{1La} \\ z_{2La} \\ z_{3La} \end{bmatrix} = \begin{bmatrix} -\cos\varphi_A \sin\chi_a \\ \cos\varphi_A \cos\chi_a \\ \sin\varphi_A \end{bmatrix},$$

$$W_{L_a} = \begin{bmatrix} \cos(\lambda_a/2) & 0 & 0 & \sin(\lambda_a/2) \\ 0 & \cos(\lambda_a/2) & \sin(\lambda_a/2) & 0 \\ 0 & -\sin(\lambda_a/2) & \cos(\lambda_a/2) & 0 \\ -\sin(\lambda_a/2) & 0 & 0 & \cos(\lambda_a/2) \end{bmatrix} \times$$

$$\times \begin{bmatrix} \cos[(\pi/2-\varphi_A)/2] & 0 & -\sin[(\pi/2-\varphi_A)/2] & 0 \\ 0 & \cos[(\pi/2-\varphi_A)/2] & 0 & \sin[(\pi/2-\varphi_A)/2] \\ \sin[(\pi/2-\varphi_A)/2] & 0 & \cos[(\pi/2-\varphi_A)/2] & 0 \\ 0 & -\sin[(\pi/2-\varphi_A)/2] & 0 & \cos[(\pi/2-\varphi_A)/2] \end{bmatrix} \cdot \begin{bmatrix} \cos[(\pi/2-\chi_A)/2] \\ 0 \\ 0 \\ \sin[(\pi/2-\chi_A)/2] \end{bmatrix}$$

$$\Omega_{L_a} = \Xi_{L_a} = Z_{L_a}\omega_E.$$

The second step:

The IID orientation is determined by mathematical expressions used in the first and second steps of fine alignment under the "Alignment" algorithm, and corresponding angles are determined by mathematical expressions used in the third, fourth and fifth steps of fine alignment under the "Alignment" algorithm:

$$V_{nuv\,j} = \begin{bmatrix} v_{nuv_{1_j}} \\ v_{nuv_{2_j}} \\ v_{nuv_{3_j}} \end{bmatrix} = -K_j^{-1} \circ \left( \begin{bmatrix} 0 \\ v_j \\ 0 \end{bmatrix} \circ K_j \right),$$

$$\Sigma_j = \begin{bmatrix} \varsigma_{1j} \\ \varsigma_{2j} \\ \varsigma_{3j} \end{bmatrix} = \begin{bmatrix} -v_{nuv_{2j}} \dfrac{1 + e_k^2 \left(z_{2j}^2 - 0.5 z_{3j}^2\right) - h_j/r_e}{r_e} - v_{nuv_{1j}} z_{1j} z_{2j} e_k^2/r_e \\ v_{nuv_{1j}} \dfrac{1 + e_k^2 \left(z_{1j}^2 - 0.5 z_{3j}^2\right) - h_j/r_e}{r_e} + v_{nuv_{2j}} z_{1j} z_{2j} e_k^2/r_e \\ 0 \end{bmatrix},$$

$$W_j = \begin{bmatrix} w_{1j} \\ w_{2j} \\ w_{3j} \\ w_{4j} \end{bmatrix} = W_{j-1} \circ \begin{bmatrix} 1 - c_1 \nabla_{\varsigma_j}^2 + c_2 \nabla_{\varsigma_j}^4 \\ \varsigma_{1j} \Delta t s_{\varsigma_j} \\ \varsigma_{2j} \Delta t s_{\varsigma_j} \\ \varsigma_{3j} \Delta t s_{\varsigma_j} \end{bmatrix},$$

$$Z_j = \begin{bmatrix} 2\left(w_{2j} w_{4j} - w_{1j} w_{3j}\right) \\ 2\left(w_{3j} w_{4j} + w_{1j} w_{2j}\right) \\ w_{1j}^2 - w_{2j}^2 - w_{3j}^2 + w_{4j}^2 \end{bmatrix},$$

$$\chi_j = -\mathrm{arctg}\left(z_{1j}/z_{2j}\right)$$

$$\varphi_j = \mathrm{arctg}\left( \frac{w_{1j}^2 - w_{2j}^2 - w_{3j}^2 + w_{4j}^2}{\sqrt{\left[2\left(w_{2j} w_{4j} + w_{1j} w_{3j}\right)\right]^2 + \left[2\left(w_{3j} w_{4j} - w_{1j} w_{2j}\right)\right]^2}} \right).$$

Data on speed and angles enables to determine speeds in the North-East-Height coordinate system. By time integrating these speeds, one can obtain values of the corresponding coordinates:

$$v_{E_j} = v_{nuv_{1j}} \cos \chi_j + v_{nuv_{2j}} \sin \chi_j,$$

$$v_{N_j} = -v_{nuv_{1j}} \sin \chi_j + v_{nuv_{2j}} \cos \chi_j,$$

$$v_{U_j} = v_{nuv_{3j}},$$

$$e_j = \sum_{m=1}^{j} v_{E_m} \Delta t,$$

$$n_j = \sum_{m=1}^{j} v_{N_m} \Delta t,$$

$$u_j = \sum_{m=1}^{j} v_{U_m} \Delta t,$$

$$\Xi_j = \begin{bmatrix} -\cos\varphi_j \sin\chi_j \\ \cos\varphi_j \cos\chi_j \\ \sin\varphi_j \end{bmatrix} \omega_E,$$

$$\Omega_{L_a} = \Xi_j + \Sigma_j,$$

where:

$W_{La}$ и $W_j$ are an initial value and a current value, respectively, of normalized quaternion determining an angular position of the NCS;

$j = L_a...N$;

$\Omega_{La}$ and $\Omega_j$ are an initial value and a current value of a vector of the Earth angular velocity in the NCS;

$\Sigma_j$ is a vector of a transporting angular velocity;

$Zj$ are elements of the third column in the direction cosine matrix according to components of normalized quaternion;

$V_{nuvj}$ is a linear velocity vector in the NCS;

$v_{Nj}$, $v_{Nj}$, $v_{Uj}$, $e_j$, $n_j$, $u_j$ are, respectively, velocities and coordinates along the East-North-Height axes;

$e_k$ is the Earth eccentricity;

$r_e$ is the Earth equatorial radius.

The "Calculation of radii" algorithm 13 (Fig. 2): since a pipeline bend may take place both in a vertical direction and in a horizontal direction, curvature horizontal and vertical components may be isolated, where pipeline bend curvature is a quantity inverse to a pipeline bend radius. In order to calculate a curvature trajectory, values of a device linear velocity and pitch and bearing angles are used. A horizontal curvature value is determined as a time derivative relation of bearing to linear velocity, and a vertical curvature value - as a time derivative relation of roll to linear velocity.

$$r_{HS_j} = \Delta s_j / \Delta \psi_j,$$

$$R_{HS_f} = F\{R_{HS}, L_S, c_S\},$$

$$r_{VS_j} = \Delta s_j / \Delta \theta_j,$$

$$R_{VS_f} = F\{R_{VS}, L_S, c_S\},$$

$$r_{HB_j} = \Delta S / \Delta \psi_j,$$

$$R_{HB_f} = F\{R_{HB}, L_B, c_B\},$$

$$r_{V B_j} = \Delta S / \Delta \theta_j,$$

$$R_{V B_f} = F\{R_{V B}, L_B, c_B\},$$

where:

$\gamma_{HSj}$ and $\gamma_{HSj}$ are, respectively, horizontal and vertical small radii,
$\gamma_{HBj}$ and $\gamma_{HBj}$ are, respectively, horizontal and vertical big radii.

$$j = L_a \dots N, \ \Delta s_j = s_j - s_{j-1},$$

$$\Delta \psi_j = \psi_j - \psi_{j-1},$$

$$\Delta \theta_j = \theta_j - \theta_{j-1},$$

where:

$\Delta S$ is a fixed value of a basic distance for determining big radii; in this case an angle increment is determined by values of angles at $\Delta S$ ends, and a value of a calculated radius is put in correspondence to a point in the middle of $\Delta S$, $\Delta \psi'_j$ and $\Delta \theta'_j$ are corresponding average estimations of angles at a basic distance;

$$R_{HS}\left[r_{HS_{La}} \ r_{HS_{La+1}} \dots r_{V B_N}\right],$$

$$R_{VS}\left[r_{VS_{La}} \ r_{VS_{La+1}} \dots r_{VS_X}\right],$$

$$R_{HB}\left[r_{H B_{La}} \ r_{HB_{La+1}} \dots r_{H B_N}\right],$$

$$R_{VB}\left[r_{V B_{La}} \ r_{V B_{La+1}} \dots r_{V B_X}\right]$$

and similarly for vectors of radii with f index, where
Ls, $L_B$ are corresponding parameters of the filter window.

The "Correction of trajectory" algorithm 14 (Fig. 2): when using correcting point coordinates obtained on the basis of data provided by a navigation system (GPS and/or GLONASS), an obtained trajectory is corrected and transferred into the North-East-Height coordinate grid:

$$\Delta E = I\{\Delta E', K, M\},$$

$$e_j = e_j + \Delta e_j,$$

$$\Delta N = I\{\Delta N', K, M\},$$

$$n_j = n_j + \Delta n_j,$$

$$\Delta U = I\{\Delta U', K, M\},$$

$$u_j = u_j + \Delta u_j,$$

where:

$\Delta e_j, \Delta n_j, \Delta u_j$ are correcting additions along the respective axes;

$$j = L_a...N, \qquad \Delta E = [\Delta e_{L_a} \; \Delta e_{L_a+1} \; ... \; \Delta e_N],$$

$$\Delta N = [\Delta n_{L_a} \; \Delta n_{L_a+1} \; ... \; \Delta n_N],$$

$$\Delta U = [\Delta u_{L_a} \; \Delta u_{L_a+1} \; ... \; \Delta u_N];$$

$I\{\bullet, K, M\}$ is an operation of linear interpolation of K-values to $M = N - L_a$;

$$\Delta E' = [\Delta e_1' \quad \Delta e_2' \quad ... \quad \Delta e_K'],$$

$$\Delta N' = [\Delta n_1' \quad \Delta n_2' \quad ... \quad \Delta n_K'],$$

$$\Delta U' = [\Delta u_1' \quad \Delta u_2' \quad ... \quad \Delta u_K']$$

are corresponding differences of correcting point coordinates and points of a trajectory obtained for corresponding distances;

$$\Delta e_k' = e_{CP_k} - e_k, \quad \Delta n_k' = n_{CP_k} - n_k, \quad \Delta u_k' = u_{CP_k} - u_k,$$

$$k = 1...K, \quad [e_{CP_k} \; n_{CP_k} \; u_{CP_k}]$$

are coordinates of a correcting point for the distance of ${}^sCP_k$ (distance for which these coordinates of a correcting point are measured);
$[e_k \; n_k \; u_k]$ are coordinates of a corrected trajectory for the distance of $s_k$, these two indicated distances should be closest to each other;
K is the number of correcting points.

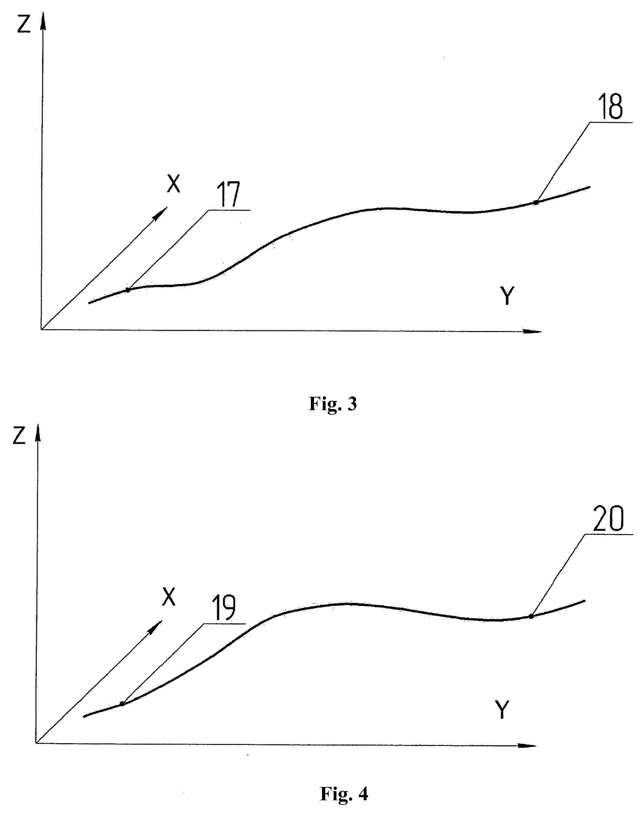

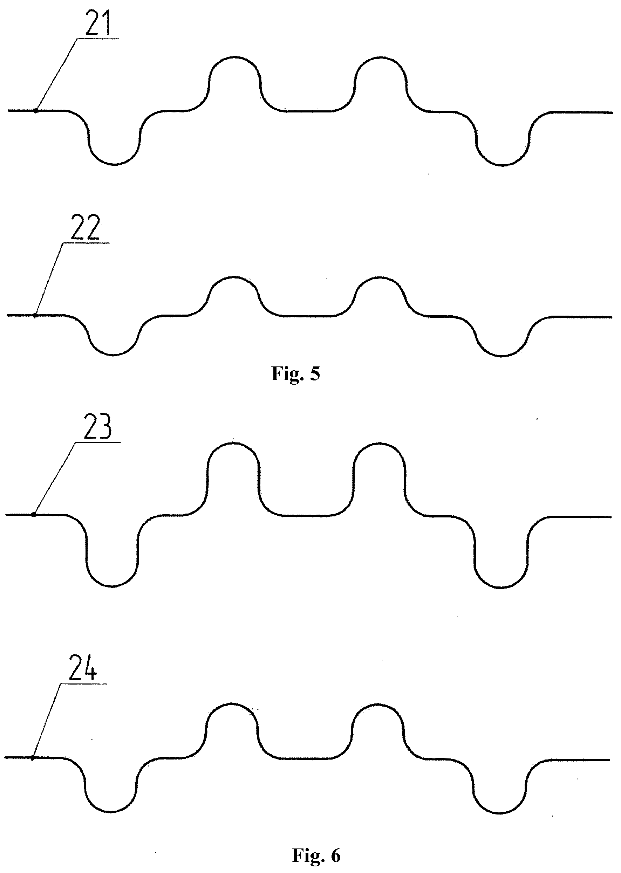

The method for determining a magnitude and a direction of pipeline displacement according to results of two or more DCDPP inspection passes pre-supposes that data of SINS navigation parameters, as measured in the same section of a pipeline, is used. The proposed method for determining relative displacement of a pipeline according to results of two or more DCDPP inspection passes enables to clearly determine a pipeline spatial displacement.
Information on DCDPP passes through the same pipeline section, as arranged in tables, is combined according to distances. An earlier DCDPP pass through a pipeline section is considered as basic one (Fig. 3). Next DCDPP passes through the pipeline section inspected (Fig. 4) are compared to the basic pass. A deflection of a pipeline section may occur both in the vertical and horizontal directions. For this, the vertical component of pipeline bend curvature is isolated: the basic one 21 (Fig. 5) and the next one 23 (Fig. 6); and the horizontal component of pipeline bend curvature is also isolated: the basic one 22 (Fig. 5) and the next one 24 (Fig. 6). The pipeline section bend curvature is a value inverse to the pipeline section bend radius:

E=l/R, where R is pipeline section bend radius.

A delta vector is calculated on results of the next and the basic DCDPP passes through a pipeline section inspected:

$$\bar{E} = \left( EH' - EH, EV' - EV \right),$$

where:

EH 22 (Fig. 5) и EH' 24 (Fig. 6) are, respectively, the curvature horizontal component identified from results of the basic DCDPP pass through a pipeline section inspected, and the curvature horizontal component identified from results of the next DCDPP pass through the pipeline section inspected;

EV 21 (Fig. 5) и EV' 23 (Fig. 6) are, respectively, the curvature vertical component identified from results of the basic DCDPP pass through a pipeline section inspected, and the curvature vertical component identified from results of the next DCDPP pass through the pipeline section inspected.

The curvature differential module is:

$$|\bar{E}| = \sqrt{(EH' - EH)^2 + (EV' - EV)^2}.$$

The criterion for the existence of a pipeline displacement in an inspected section is complied with when the curvature differential module exceeds a preset threshold value.

Coordinates of the points 17 and 18 where a displacement begins (Fig. 3) and ends (Fig. 3) in a pipeline section inspected are determined by navigation data obtained during the basic DCDPP pass. During the next DCDPP pass through the pipeline section inspected, the points where this displacement begins and ends will be 19 (Fig. 4) and 20 (Fig. 4), respectively.

In order to calculate an amount of vertical displacement within a section, it is necessary to assimilate coordinates on the ends of a displacement length in a pipeline section inspected, and calculate a difference between these coordinates within the length. For this:

$$\Delta z_1 = z_1' - z_1 , \ \Delta z_2 = z_2' - z_2$$

where:

$z_1$ and $z_2$ are, respectively, vertical coordinates of the beginning and the end of a displacement length in a pipeline section inspected during the DCDPP basic pass;

$z'_1$ and $z'_2$ are, respectively, vertical coordinates of the beginning and the end of a displacement length in a pipeline section inspected during the DCDPP next pass.

After this, a real difference of the vertical coordinates is calculated for the point **p** of the pipeline section inspected, as existing between the DCDPP basic and next passes through the pipeline section inspected:

$$\Delta z_p = z_p' - z_p - \left( \left( \Delta z_2 - \Delta z_1 \right) \frac{L_1}{L} + \Delta z_1 \right),$$

where:

L is an extent of the displacement length;

$L_1$ is a distance from the displacement length beginning to the selected **p**-point.

In order to calculate an extent of horizontal displacement on a displacement length within a pipeline section inspected, it is necessary to turn the trajectories obtained during the DCDPP basic and next passes in the horizontal plane so that the coordinates of the displacement length beginning and end along the Y-axis become zero. For this, coordinates of so tuned trajectories are calculated as follows:

$$x_{P_{rot}} = \sqrt{(x_p - x_1)^2 + (y_p - y_1)^2}\,\cos\psi \,,$$

$$y_{P_{rot}} = \sqrt{(x_p - x_1)^2 + (y_p - y_1)^2}\,\sin\psi \,,$$

$$x'_{P_{rot}} = \sqrt{(x'_p - x'_1)^2 + (y'_p - y'_1)^2}\,\cos\psi' \,,$$

$$y'_{P_{rot}} = \sqrt{(x'_p - x'_1)^2 + (y'_p - y'_1)^2}\,\sin\psi' \,,$$

$$\psi = \operatorname{arctg}\frac{y_p - y_1}{x_p - x_1} - \operatorname{arctg}\frac{y_2 - y_1}{x_2 - x_1}$$

$$\psi' = \operatorname{arctg}\frac{y'_p - y'_1}{x'_p - x'_1} - \operatorname{arctg}\frac{y'_2 - y'_1}{x'_2 - x'_1}$$

A real difference between the coordinates in the horizontal plane will be:

$$\Delta x_p = x'_{P_{rot}} - x_{P_{rot}} \,, \quad \Delta y_p = y'_{P_{rot}} - y_{P_{rot}} \,.$$

The separate procedures for calculating displacements in the vertical and horizontal planes are used for the purpose of decreasing errors in determined displacements, when the pipeline trajectories tend to an orthogonal position during the basic and next passes.

The displacement absolute value will be:

$$\Delta = \sqrt{\Delta x_p^2 + \Delta y_p^2 + \Delta z_p^2}$$

The maximum displacement value in a pipeline section may be determined as a maximum value of absolute displacement.

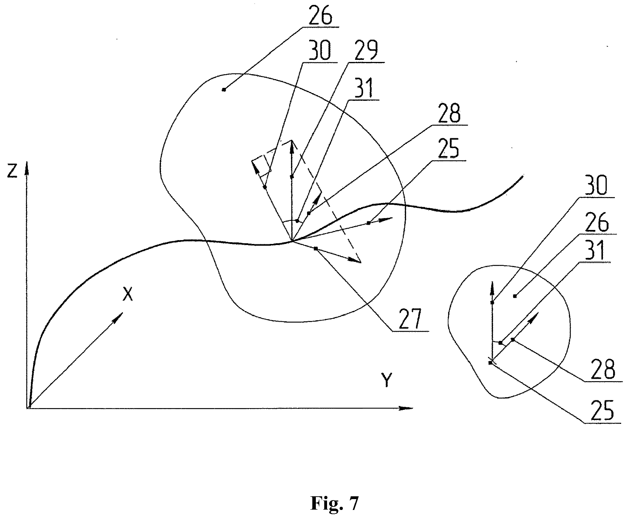

A direction of a calculated displacement vector 27 (Fig. 7) should be determined in the plane 26 (Fig. 7) that is perpendicular to the pipeline axis, the position of "12 hours" being taken as 0°. Displacement direction vectors are to be calculated within the displacement length in a pipeline section inspected. It is proposed to establish coordinates of welds between individual pipeline sections as the points of the vector beginning and end.

A unit vector 25 of the pipeline axis direction (Fig. 7):

$$\bar{n} = \left( n_x, n_y, n_z \right) = \left( \frac{N_x}{|\bar{N}|}, \frac{N_y}{|\bar{N}|}, \frac{N_z}{|\bar{N}|} \right)$$

where:

$$\bar{N} = \left( N_{x_2} - N_{x_1}, N_{y_2} - N_{y_1}, N_{z_2} - N_{z_1} \right), \quad |\bar{N}| = \sqrt{N_x^2 + N_y^2 + N_z^2} \;\; ;$$

$N_{x1}$, $N_{y1}$, $N_{z1}$ are coordinates of the beginning of an individual pipeline section;
$N_{x2}$, $N_{y2}$, $N_{z2}$ are coordinates of the end of an individual pipeline section;

$n_x$, $n_y$, $n_z$ are coordinates of the unit vector 25 (Fig. 7).

The calculated displacement vector 27 (Fig. 7):

$$\vec{\Delta} = (\Delta x_p, \Delta y_p, \Delta z_p).$$

A projection 28 of the calculated displacement vector (Fig. 7), which is perpendicular to the direction of working fluid movement through a pipeline, is calculated according to the following formula:

$$\vec{\Delta}p = \vec{\Delta} - (\vec{\Delta} \cdot \vec{n}) \cdot \vec{n}.$$

Then the coefficient is calculated:

$$K = \vec{\Delta} \cdot \vec{n} = \Delta x_p \cdot n_X + \Delta y_p \cdot n_Y + \Delta z_p \cdot n_Z.$$

Then, subject to the calculated coefficient, the projection 28 of the calculated displacement vector (Fig. 7) will be:

$$\vec{\Delta}p = \vec{\Delta} - K \cdot \vec{n} = (\Delta x_p - K \cdot n_X, \Delta y_p - K \cdot n_Y, \Delta z_p - K \cdot n_Z),$$

$$\left|\vec{\Delta}p\right| = \sqrt{\Delta p_X^2 + \Delta p_Y^2 + \Delta p_Z^2},$$

where:

$\Delta p_x$, $\Delta p_y$, $\Delta p_z$ are coordinates of the calculated vector projection 28 (Fig. 7) onto the plane 26 (Fig. 7).

The vertical projection 30 (Fig. 7) onto the plane 28 (Fig. 7) perpendicular to the direction of the working fluid movement through the pipeline:

$$\vec{z}_P = (-n_Z \cdot n_X, -n_Z \cdot n_Y, 1 - n_Z \cdot n_Z),$$

$$\left|\vec{z}_P\right| = \sqrt{z_{PX}^2 + z_{PY}^2 + z_{PZ}^2},$$

where:

$z_{PX}$, $z_{PY}$, $z_{PZ}$ are coordinates of the vertical projection 30 (Fig. 7) onto the plane 28 (Fig. 7).

A cosine of the required displacement direction angle 31 (Fig. 7) can be found according to the following formula:

$$C = \cos\alpha = \frac{\vec{\Delta}p \cdot \vec{z}_P}{\left|\vec{\Delta}p\right| \cdot \left|\vec{z}_P\right|} = \frac{\Delta p_X \cdot z_{PX} + \Delta p_Y \cdot z_{PY} + \Delta p_Z \cdot z_{PZ}}{\left|\vec{\Delta}p\right| \cdot \left|\vec{z}_P\right|}.$$

The displacement direction will be:

$$S = n_{VX} \cdot n_X + n_{VY} \cdot n_Y + n_{VZ} \cdot n_Z,$$

$$\vec{n}_V = (n_{VX}, n_{VY}, n_{VZ}) = (\Delta p_Y \cdot z_{PZ} - \Delta p_Z \cdot z_{PY}, \Delta p_X \cdot z_{PZ} - \Delta p_Z \cdot z_{PX}, \Delta p_Y \cdot z_{PX} - \Delta p_X \cdot z_{PY})$$

If S>0, then $\alpha$ = arccos C. If S<0, then $\alpha$ = 360 - arccos C.

**Claims**

1. A device of a diagnostic complex for determining a pipeline position, consisting of a hardware portion comprising accelerometers, gyroscopes and an odometer, **characterized in that** it consists of the hardware portion and a software portion, said hardware portion being installed on an in-pipe inspection device and consists of a set of sensors: an accelerometer connected to the X-axis, an accelerometer connected to the Y-axis of a strapdown inertial navigation system, an accelerometer connected to the Z-axis of a strapdown inertial navigation system, a gyroscope connected to the X-axis of a strapdown inertial navigation system, a gyroscope connected to the Y-axis of a strapdown inertial navigation system, a gyroscope connected to the Z-axis of a strapdown inertial navigation system, and an odometer.

2. The device according to Claim 1, **characterized in that** said software portion consists of algorithms for determining navigation parameters in the following sequence: calculation of linear velocity, movement of the in-pipe inspection device being determined according to data obtained from the hardware portion of the device of a diagnostic complex for determining a pipeline position; alignment, i.e., a spatial position of the in-pipe inspection device is determined by identifying initial pitch and bearing angles in the North-East-Height rectangular coordinate system with due regard to the Earth rotation and the IID input geodesic coordinates within first several minutes when the IID is not moved; navigation parameters are calculated with the use of a time increment value between reports of accelerometers and gyroscopes and readings of the odometer together with determination of corresponding angles of roll, pitch, bearing; radii of pipeline bends are calculated both in vertical and in horizontal directions; trajectory is corrected with the use of correcting point coordinates obtained by referencing particular points of a pipeline to the geodesic coordinates in the North-East-Height system with the use of a global satellite navigation system (GPS and/or GLONASS).

3. The device according to Claims 1 and 2, **characterized in that** after passing the inspection device, as equipped with the hardware portion of the diagnostic complex for determining a pipeline position, through a pipeline, data, as obtained from the hardware portion of the diagnostic complex for determining a pipeline position, is an array comprising readings of the three accelerometers and the three gyroscopes in a rectangular coordinate system, which is connected to the orthogonal axes of the strapdown inertial navigation system and, hence, the in-pipe inspection device, and readings of the odometer.

4. The device according to Claim 1, **characterized in that** the axis of the strapdown inertial navigation system corresponds to the longitudinal axis of the in-pipe inspection device, and the data array is re-recorded from the hardware portion of the diagnostic complex for determining a pipeline position, and all navigation parameters are calculated in a computer using a special program.

5. A method for determining a pipeline position, **characterized in that** measurement data on magnitudes and directions of linear displacements of a pipeline section, as obtained in the result of two or more inspection passes of the in-pipe inspection device with the diagnostic complex for determining a pipeline position, as installed thereon, through the same section of a pipeline with the same direction of the working fluid flow is used.

6. The method according to Claim 5, **characterized in that** data obtained from the diagnostic complex for determining a pipeline position is arranged in tables and combined according to distances.

7. The method according to Claim 5, **characterized in that** data obtained during an earlier pass of the in-pipe inspection device with the diagnostic complex hardware portion installed thereon is considered as basic, and that obtained during next passes is compared with the basic data.

8. The method according to Claim 7, **characterized in that** the criterion for the existence of a pipeline displacement in an inspected section is complied with when the curvature differential module exceeds a preset threshold value.

**Amended claims under Art. 19.1 PCT**

**1.** A device of a diagnostic complex for determining a pipeline position, the device consisting of a software portion and a hardware portion, said hardware portion being installed on an in-pipe inspection device and consists of a set of sensors: an accelerometer connected to a X-axis of a strapdown inertial navigation system, an accelerometer connected to a Y-axis of the strapdown inertial navigation system, an accelerometer connected to a Z-axis of the strapdown inertial navigation system, a gyroscope connected to the X-axis of the strapdown inertial navigation system, a gyroscope connected to the Y-axis of the strapdown inertial navigation system, a gyroscope connected to the Z-axis of the strapdown inertial navigation system, and an odometer, ***characterized in that*** the software portion consists of algorithms for determining navigation parameters in the following sequence: calculation of linear velocity, wherein movement of the in-pipe inspection device being determined according to data obtained from the hardware portion of the device of a diagnostic complex for determining a pipeline position; alignment, i.e., a spatial position of the in-pipe inspection device is determined by identifying initial pitch and bearing angles in the North-East-Height rectangular coordinate system with due regard to the Earth rotation and input geodesic coordinates of the in-pipe inspection device within first several minutes when the in-pipe inspection device is not moved; navigation parameters are calculated with the use of a time increment value between reports of the accelerometers and the gyroscopes and readings of the odometer together with determination of corresponding angles of roll, pitch, bearing; radii of pipeline bends are calculated both in vertical and in horizontal directions; a trajectory is corrected with the use of correcting point coordinates obtained by referencing particular points of a pipeline to the geodesic coordinates in the North-East-Height system with the use of a global satellite navigation system (GPS and/or GLONASS); after passing the inspection device, as equipped with the hardware portion of the diagnostic complex for determining a pipeline position, through the pipeline, data, as obtained from the hardware portion of the diagnostic complex for determining a pipeline position, being an array comprising readings of the three accelerometers and the three gyroscopes in the rectangular coordinate system, which is connected to the orthogonal axes of the strapdown inertial navigation system and, hence, the in-pipe inspection device, and readings of the odometer, wherein the axis of the strapdown inertial navigation system corresponding to the longitudinal axis of the in-pipe inspection device, and the data array being re-recorded from the hardware portion of the diagnostic complex for determining a pipeline position, and all navigation parameters being calculated with the use of the software portion that consists of algorithms for determining navigation parameters on the basis of data obtained from the hardware portion of the diagnostic complex for determining a pipeline position, said algorithms being applied in the following sequence:

- a "Linear velocity calculation" algorithm: a movement speed of the diagnostic complex for determining a pipeline position is calculated by using odometer readings and odometer impulse timer readings;
- a "Alignment" algorithm, i.e., determination of a spatial position of the in-pipe inspection device: at the pass start time the in-pipe inspection device remains immovable for several minutes, this time period is being sensed by movement speed values obtained in the previous step, wherein the strapdown inertial navigation system being aligned by determining initial bearing and pitch angles in the North-East-Height rectangular coordinate system according to the Earth rotation and preset geodesic coordinates of the in-pipe inspection device; the "Alignment" algorithm consists of "Rough alignment" and "Fine alignment" that consists of two steps;
- a "Calculation of navigation parameters" algorithm consists of several steps: calculation of intermediate parameters, an orientation of the in-pipe inspection device is determined according to mathematical expressions used in the "Fine alignment" step of the "Alignment" algorithm;
- a "Calculation of radii" algorithm: device linear velocity values and pitch and bearing angles are used;
- a "Correction of trajectory" algorithm: when using correcting point coordinates obtained on the basis of data received from the satellite system (GPS and/or GLONASS), an obtained trajectory is corrected and transferred into the North-East-Height coordinate grid.

**2.** A method for determining a pipeline relative displacement according to results of two or more passes of the diagnostic complex for determining a pipeline position, consisting in that measurement data on magnitudes and directions of linear displacements of a pipeline section, as obtained in the result of the two or more inspection passes of the in-pipe inspection device with the diagnostic complex for determining a pipeline position, as installed thereon, through the same section of a pipeline with the same direction of a working fluid flow is used, wherein data obtained from the diagnostic complex for determining a pipeline position being arranged in tables and combined according to distances, and data obtained during an earlier pass of the in-pipe inspection device with the diagnostic complex hardware portion installed thereon being considered as basic data, and data obtained during next passes being compared with the basic data, and a criterion for existence of a pipeline displacement in an inspected section being that a curvature differential module exceeds a preset threshold value.

Fig. 1

Fig. 2

**Fig. 3**

**Fig. 4**

21

Fig. 5

23

24

Fig. 6

**Fig. 7**

## INTERNATIONAL SEARCH REPORT

| International application No. |
| --- |
| PCT/RU 2014/000859 |

**A.    CLASSIFICATION OF SUBJECT MATTER**
F17D 5/00 (200/01); G01C 21/00 (2006/01)

According to International Patent Classification (IPC) or to both national classification and IPC

**B.    FIELDS SEARCHED**

Minimum documentation searched (classification system followed by classification symbols)
F17D 5/00, G01C 21/00

Documentation searched other than minimum documentation to the extent that such documents are included in the fields searched

Electronic data base consulted during the international search (name of data base and, where practicable, search terms used)
PatSearch (RUPTO internal), USPTO, PAJ, Esp@cenet, DWPI, EAPATIS, PATENTSCOPE, Information Retrieval System of FIPS

**C.    DOCUMENTS CONSIDERED TO BE RELEVANT**

| Category* | Citation of document, with indication, where appropriate, of the relevant passages | Relevant to claim No. |
| --- | --- | --- |
| X | US 6243657 B1, (PII NOTTH AMERICA, INC.), 05.06.2001, the abstract, fig. 1-9, col. 8, line 65 -col. 9, line 62, col. 10 line 55-58 col. 18 line, 10 col. 20 line 55, col. 24 line 35 -65, col. 30 line 50-65 | 1-8 |
| X | US 6553322 B1 (HONEYWELL INTERNATIONAL INC.) 22.04.2003, the abstract, fig. 1-5, col. 2, line 30 - col.14, line 5 | 1, 3-8 |
| A | US 5331578 A (DEUTSCHE FORSCHUNGSANSTALT FUR LUFT UND RAUMFAHRT E. V.) 19.07.1994 | 1-8 |
| A | RU 2334162 C1 (OBSCHESTVO S OGRANICHENNOI OTVETSTVENNOSTJU «GAZPROMENERGODIAGNOSTIKA») 20.09.2008 | 1-8 |

☐    Further documents are listed in the continuation of Box C.          ☐    See patent family annex.

| | |
| --- | --- |
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| 25 February 2015 (25.02.2015) | 05 March 2015 (05.03.2015) |

| Name and mailing address of the ISA/ RU | Authorized officer |
| --- | --- |
| Facsimile No. | Telephone No. |

Form PCT/ISA/210 (second sheet) (April 2005)

**EP 2 985 509 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 1809297 A1
- SU 1404815 A1
- RU 2106569 C1
- RU 2334162 C1